Europäisches Patentamt

European Patent Office

Office européen des brevets

(11) Publication number: **0 299 701**
**A1**

## (12) EUROPEAN PATENT APPLICATION

(21) Application number: **88306317.4**

(22) Date of filing: **11.07.88**

(51) Int. Cl.4: **G01M 3/10**

(30) Priority: **13.07.87 US 72472**

(43) Date of publication of application:
**18.01.89 Bulletin 89/03**

(84) Designated Contracting States:
**AT BE CH DE ES FR GB GR IT LI LU NL SE**

(71) Applicant: **W.L. GORE & ASSOCIATES, INC.**
**555 Paper Mill Road P.O. Box 9206**
**Newark Delaware 19714(US)**

(72) Inventor: **Patchel, Kenneth A.**
**1389 Parkersville Road**
**Kennett Square, PA 19348(US)**

(74) Representative: **Knott, Stephen Gilbert et al**
**MATHISEN, MACARA & CO. The Coach**
**House 6-8 Swakeleys Road**
**Ickenham Uxbridge Middlesex UB10 8BZ(GB)**

(54) **Gas leak detection.**

(57) An apparatus and method for testing for gas leaks in articles such as waterproof gloves and glove inserts by applying gas under controlled pressure into a confined glove or insert (11) and observing the bubbling (13) or lack thereof of escaping gas in a suitable reservoir (15) of liquid (16), the glove (11) not being made wet by the liquid (16).

FIG. I.

# GAS LEAK DETECTION

This invention relates to an apparatus for testing and a method for testing the leakage of gas through an article, in particular for testing for water proofness of gloves or glove inserts.

Gloves can be made completely of waterproof material or can be rendered waterproof by the use of glove inserts made from waterproof materials placed within glove outer shells to render the combination waterproof. Waterproof gloves have become popular for use in outdoor sports and activities or for working in the outdoors under cold and wet conditions to maintain dry, warm, and comfortable hands. Truly waterproof qualities under quite severe conditions of weather extremes and usage are much sought after.

To insure that the glove or insert is really completely waterproof, the manufacturer usually test for leaks. Such testing usually involves immersing the glove in a liquid, such as water. This test method, however, leaves a wet glove which must be dried before packing and shipping even if it is found to be totally waterproof. Such methods and the accompanying apparatus thus tend to be slow and not be very economical even when used en mass in batteries of testers.

To overcome some of the problems generally associated with wet testing, dry methods have been tried, such as the device for powdering and pinhole leak testing rubber surgeons gloves described in U.S.-A-2,543,911. A hollow elastic body to hold powder and to hold in place a surgeons glove was pressed to blow powder into the glove being tested and at the same time expand the glove under pressure to reveal and pinhole air leaks which could be visually observed. U.S.-A-4,306,448 shows a means to close a container with a resilient plug, raise the gas pressure within the container, and measure any pressure decline associated with a leak by a pressure gauge.

These methods work satisfactorily for rigid containers conveniently closed by resilient plugs or for very flexible materials, such as thin rubber gloves, when a hole will become large enough under pressure to be readily detectable and the product is cheap enough to be discarded if found to be leaky. They have, however, limited application for a wide variety of the gloves in the market place.

According to a first aspect of the invention, there is provided an apparatus for testing leakage of gas through an article comprising a tube for containing and confining said article and having an opening, a solid plug co-operating with the opening of said tube to clamp therebetween the article such that a portion of the article and the plug form a closed volume in which a positive gas pressure can be established, valved means for passage of a gas into said closed volume to produce said positive pressure, and exit for passage of gas leading from the tube and having a check valve, a container for containing a quantity of liquid within which is received gas from said exit so that gas from leaks in said article is observed as bubbles in the said liquid after said positive pressure has been established in said article.

According to a second aspect of the invention, there is provided a process for testing for leakage of gas through an article, comprising the steps of inserting said article into a tube having an opening, inserting a plug into said opening so that said plug co-operates with said opening to clamp therebetween the article such that a portion of the article and the plug form a closed volume in which a positive gas pressure can be established, introducing gas into said closed volume to establish said positive gas pressure therein, then, after establishment of said gas pressure in said closed volume, receiving in a container of liquid, via an exit leading from said tube, gas from leaks in said article so that said gas from said leaks is observed as bubbles in said liquid.

The following is a more detailed description of some embodiments of the invention, by way of example, reference being made to the accompanying drawings in which:-

Figure 1 shows a perspective view of an apparatus for testing leakage of gas through a waterproof glove or glove insert and containing liquid for immersion of the outer end of the gas exit tube, and

Figure 2 is a cross-section of the apparatus of Figure 1 in closed position while it is holding a glove or insert in position to measure any gas leakage it may have.

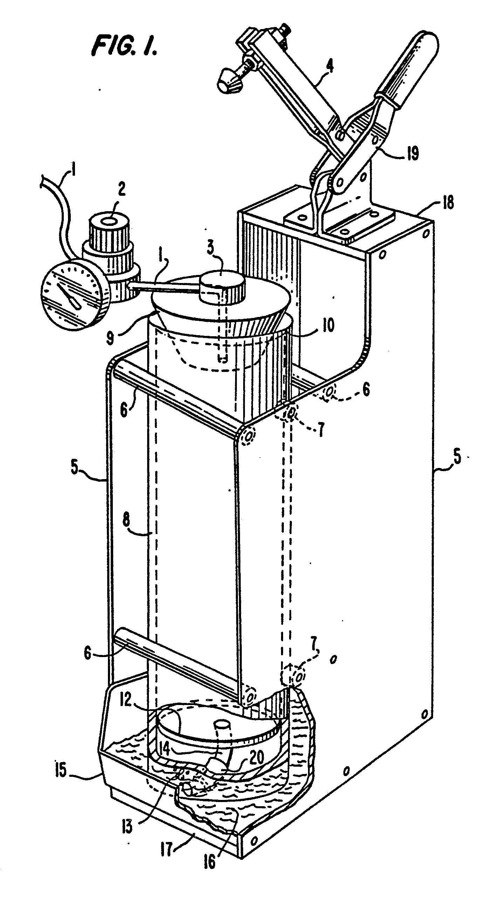

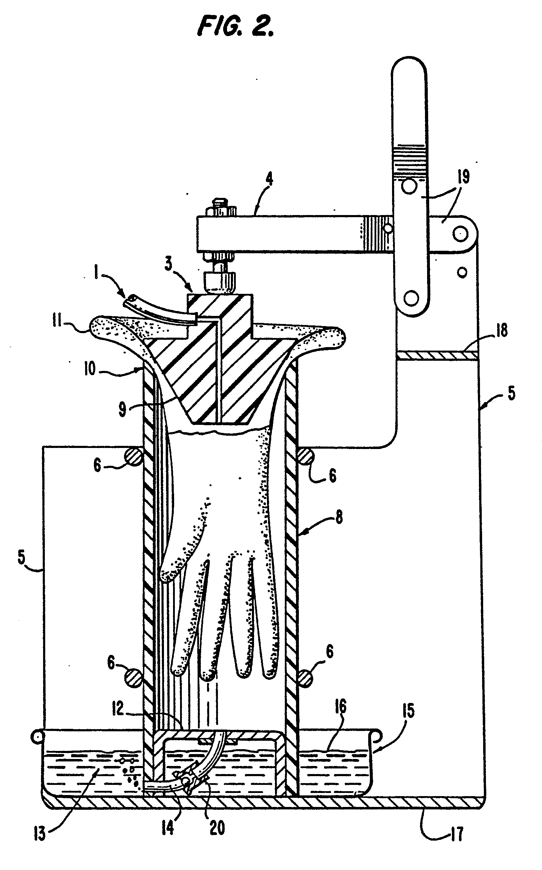

The testing apparatus comprises a cylindrical tube 8, a tapered conical plug 3, an exit tube 14 for gas, a container 15 for holding a liquid 16, a clamping mechanism 19 for applying pressure to plug 3, a support stand, having side plates 5, bottom support plate 17, and top support bar 18 for mounting clamping mechanism 19, tube 8, plug 3, and container 15, and positioning and support means, including bars 6 and buttons 7, for tube 8. The cylindrical tube 8 may conveniently be made from plastic, such as from a section of plastic pipe, but may be of metal or other materials in tubular form and has a beveled top edge 10 for conforming with or fitting against a solid tapered conical plug 3. The plug 3 is usually of plastic but may be formed from other suitable materials and it fits closely the bevel of the tube 8 to hold tightly a portion of a glove 11 (or glove insert) adjacent a hand receiving opening therein, as shown in Figure 2, between it and the plug 3 under pressure applied by the arm 4 of the clamping mechanism 19, so as to retain gas pressure developed within the glove (or glove insert) by gas forced in under pressure through the gas inlet tube 1 which passes through the plug 3 into the glove. The gas is usually and conveniently air which is supplied at valve controlled pressure, usually two to five pounds per square inch gauge (13.8 to 34.5 k Pa). Air can be supplied by pressure cylinder, mechanical or electrical pump, or by hand pump, or any other convenient means known in the art. Figure 1 shows a valved mechanism 2 with pressure gauge attached to the gas inlet tube 1 to control the pressure of gas entering the glove 11 in the tube 8. The bevel 10 and the conical side of plug 3 act together to pinch the glove 11 tightly enough to maintain a positive pressure within the glove 11.

The gas exit tube 14 is affixed to an aperture in a bulkhead 12 which is sealed into the bottom of the tube 8 to seal out liquid 16 from the tube 8 so that the liquid 16, usually and conveniently water, will not enter the tube 8 and wet a glove 11 or insert under test. The bulkhead 12 may also be plastic, often the same plastic as the tube 8. The gas exit tube 14 passes through a notch or an aperture in or near the bottom edge of the tube 8 and allows any excess gas in tube 8 to flow out or bubble out through the liquid 16 in the container 15 where such bubbles 13 may be observed. The check valve 20 is affixed on the tube 14 between the bulkhead 12 and the gas exit aperture through the wall of the tube 8 to block entry of any liquid 16 in the event of developement of less than atmospheric pressure within the tube 8 or the glove 11 during a testing procedure such as during removal of the glove 11.

The container 15 may be a simple rectangular plastic tray and sufficient liquid 16, usually water, is added to maintain a level requisite for easy observation of any bubbles 13 which may be issuing from the gas exit tube 14.

The clamping mechanism 19 is affixed to the bar 18 such that the bar 4 of the mechanism may be lowered to exert enough pressure downwardly on the plug 3 so as to effect a seal at the bevels and glove or insert. The bar 18, side plates 5, and bottom support plate 17 are of metal, are usually aluminium, but may be steel or other metal, and when fastened together with positioning and support bars 6 and buttons 7, both also of the same metals, provide a sturdy support for tube 8, clamping mechanism 19, and container 15. The clamping mechanism 19, is similarly made from the same metals used above and fastened in place by standard art means.

The Figure 2 cross-section depicts how a glove 11 under test is placed inside the tube 8 and the plug 3 inserted into the open end of the glove 11.

To test the waterproof glove 11 (or a glove insert) for leaks, air is admitted into the glove 11 (or glove insert) through tube 1 to about 2-5 psig (13.8 to 34.5 k Pa). The glove 11 (or glove insert) expands against the walls of the tube 8 and some bubbles are emitted. At full expansion bubbles 13 cease to emerge from tube 14 if no leak exists in the glove 11 (or glove insert). If there is a leak, bubbles 13 will continue to emerge from the tube 14 as will be readily observable in liquid 16 (usually water). After a few seconds observation for leaks, the gas flow into 1 is stopped, the pressure within the glove 11 released, the arm 4 of mechanism 19 raised, and the glove 11 removed for packing for sale or rejected for leakage and return to manufacturer.

The apparatus and method of use for testing for leaks described above with reference to the drawings are simple to use in the manufacturing process, in field testing, and in sales, are effective, rapid, and accurate in determining the presence of even a tiny pinhole leak if present or ruling it out if not present, and do not risk contamination of or ruining of a glove or insert by wetting it with water or other liquid during the test procedure. No significant expertise is required to operate the apparatus properly and simple non-technical training suffices.

Although the apparatus described above with reference to the drawings is seen to be useful for relatively soft hollow articles, such as the waterproof gloves and glove inserts used to illustrate the inventive apparatus, other harder, firmer articles may be tested for leaks, particularly if the hard, tapered conical plug used for gloves and inserts is replaced by a more elastic or resilient plug.

## Claims

1. An apparatus for testing leakage of gas through an article characterised in that the apparatus comprises a tube (8) for containing and confining said article and having an opening (10), a solid plug (3) co-operating with the opening (10) of said tube (8) to clamp therebetween the article such that a portion of the article and the plug (3) form a closed volume in which a positive gas pressure can be established, valved means (1) for passage of a gas into said closed volume to produce said positive pressure, an exit (14) for passage of gas leading from the tube (8) and having a check valve (20) and, a container (15) for containing a quantity of liquid (16) within which is received gas from said exit (14) so that gas from leaks in said article is observed as bubbles (13) in the said liquid (16) after said positive pressure has been established in said article.

2. An apparatus in accordance with claim 1, characterised in that the article is waterproof handwear (11), said tube (8) being cylindrical for receiving said waterproof handwear (11), a portion of said waterproof handwear adjacent a hand-receiving opening in said waterproof handwear being clamped between the plug (3) and the opening (10) in said tube.

3. An apparatus in accordance with claim 1 or claim 2, characterised in that said opening (10) in said tube (8) has an inwardly beveled top edge, said plug (3) having a taper corresponding to said bevel for clamping said portion of said article therebetween.

4. An apparatus in accordance with any preceding claim characterised in that said means (1) for passage of a gas are formed as part of said plug (3).

5. An apparatus in accordance with any preceding claim characterised in that a clamping mechanism (19) is provided for raising, lowering and applying pressure to said plug (3) to clamp said portion of said article.

6. An apparatus in accordance with any preceding claim characterised in that said tube (8) is arranged vertically and has a raised bulkhead bottom closure (12) for isolating liquid (16) from said tube (8), said container (15) surrounding the bottom of said tube (8), said exit (14) comprising a tube leading from said bulkhead bottom closure (12) and having an end immersed in a liquid (16) in said container (15).

7. An apparatus in accordance with any preceding claim characterised in that the gas is air and the liquid (16) is water.

8. A process for testing for leakage of gas through an article, characterised in that the process comprises the steps of inserting said article into a tube (8) having an opening (10), inserting a plug (3) into said opening (10) so that said plug (3) cooperates with said opening (10) to clamp therebetween the article such that a portion of the article and the plug (3) form a closed volume in which a positive gas pressure can be established, introducing gas into said closed volume to establish said positive gas pressure therein, then, and after establishment of said gas pressure in said closed volume, receiving in a container (15) of liquid (16), via an exit (14) leading from said tube (8), gas from leaks in said article so that said gas from said leaks is observed as bubbles (13) in said liquid (16).

9. A process in accordance with claim 8, characterised in that said article is waterproof handwear (11) such as a glove or glove insert.

10. A process in accordance with claim 8 or claim 9 characterised in that the gas is air and the liquid (16) is water.

11. A process in accordance with any one of claims 8 to 10 characterised in that the positive gas pressure is between 2 and 5 pounds/square inch gauge gas pressure (13.8 to 34.5 k Pa).

12. A process in accordance with any one of claims 8 to 11, characterised in that, after establishment of said gas pressure, observation of said bubbles (13) is delayed for between 5 and 10 seconds to allow gas expelled by pressurisation of the article to pass through said liquid (16).

FIG. 1.

## FIG. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 054 204 (McDONALD)<br>* Claim 1; figure 1 * | 1,8 | G 01 M 3/10 |
| A | EP-A-0 006 029 (NYSSE et al.)<br>* Abstract; claims 1,14 * | 1,8 | |
| A,D | US-A-2 543 911 (ISAACS)<br>* Claims 1,3; figure 1 * | 1,8 | |

TECHNICAL FIELDS
SEARCHED (Int. Cl.4)

G 01 M 3/00

The present search report has been drawn up for all claims

| Place of search | Date of completion of the search | Examiner |
|---|---|---|
| THE HAGUE | 20-09-1988 | VORROPOULOS G |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons
 
& : member of the same patent family, corresponding
　document

EPO FORM 1503 03.82 (P0401)